# EUROPEAN PATENT SPECIFICATION

(11) **EP 2 505 796 B1**
(45) Date of publication and mention of the grant of the patent: **22.10.2014**
(21) Application number: 12157151.7
(22) Date of filing: 27.02.2012
(51) Int. Cl.: F16H 53/02, F01L 1/047, F01L 1/08

(54) **Cam structure**
Nockenstruktur
Structure de came

(30) Priority: 28.03.2011 JP 2011069288
(43) Date of publication of application: 03.10.2012
(73) Proprietor: Mitsubishi Jidosha Kogyo Kabushiki Kaisha, Tokyo 108-8410 (JP)
(72) Inventor: YOSHIHARA, Akira, Tokyo, 108-8410 (JP); KIDO, Yusuke, Tokyo, 108-8410 (JP); HASEGAWA, Takeshi, Tokyo, 108-8410 (JP); MURATA, Mitsuhiko, Tokyo, 108-8410 (JP); UMEMURA, Toshiaki, Tokyo, 108-8410 (JP); HONGO, Fuminobu, Tokyo, 108-8410 (JP)
(74) Representative: Vossius & Partner

(56) References cited:
- DE-A1- 19 720 900
- DE-A1-102007 059 079
- DE-C1- 19 618 253
- GB-A- 239 579
- US-A- 5 799 546
- US-B2- 6 928 970

## Description

### Technical Field

The present invention relates to a cam structure for an internal combustion engine (an engine).

### Background Art

As a type of cam structure which constitutes a valve mechanism of an engine, there is known a cam structure in which a roller is provided at a distal end portion of a valve lifting portion of a base cam of a cam lobe. Comparing with a cam structure without a roller, the cam structure with the roller like the conventional one above, superior advantages can be obtained, including improved fuel economy due to reduced friction and reduced cam driving torque in a low revolving speed region of the engine. For example, JP-UM-A-63-147505 (PTL1) and JP-UM-A-63-065806 (PTL2) below disclose a specific example of the cam structure with the roller.

PTL1 discloses a cam structure (not shown in Drawings) which includes a camshaft which rotates in association with an operation of an engine and a cam lobe which drives a follower portion of a valve mechanism of the engine. The cam lobe has a base cam and a roller. The base cam is made up of a cylindrical member and two plate-shaped cam pieces which hold the cylindrical member therebetween, and has a base circular portion and a valve lifting portion. The roller is provided at a distal end portion of the valve lifting portion and is adapted to rotate freely with respect to an axis which is parallel to an axis of the camshaft. The camshaft is inserted through a shaft mounting hole formed in the base circular portion, and a rotating shaft of the roller is inserted through a shaft mounting hole formed in the valve lifting portion.

PTL2 discloses a cam structure (not shown in Drawings) which includes a camshaft which rotates in association with an operation of an engine and a cam lobe which drives a follower portion of a valve mechanism of the engine. The cam lobe has a base cam which is made up of a base circular portion and a valve lifting portion and a roller which is provided at a distal end portion of the valve lifting portion and which is adapted to rotate freely with respect to an axis which is parallel to an axis of the camshaft. In the valve lifting portion, entire of an outer circumferential face of the distal end portion is cut out so as to form a cutout portion. The roller is fitted in the cutout portion in the base cam, and a roller rotating shaft is supported by plates which are fixed to both side faces of the base cam with screws. An opposing face of the cutout portion which opposes an outer circumferential face of the roller is formed into a curved plane which is curved toward the roller. A radius of curvature of the opposing face and a radius of curvature of the outer circumferential face of the roller are centered in the same position, and a gap having a constant width is defined between the opposing face and the outer circumferential face of the roller.

DE 10 2007 059 079 A1 discloses a cam of a camshaft comprising a cam circle and a cam nose. The shape of cam is mainly determined by a base body with sides and a roller associated to camshaft as well as by a lifting roller associated o cam nose. The roller is mounted to the camshaft in a coaxial and rotatable manner and transfers the power exerted on the roller directly onto the camshaft.

### Summary of Invention

### Technical Problem

The cam structures with the roller disclosed in PTL1 and PTL2 have the following problems.

In the cam structure with the roller, from the viewpoint of durability of the cam lobe, it is desired that a peak of acceleration of the valve, that is, a maximum load that the cam lobe receives from the follower portion of the valve mechanism is received not by the roller portion but by the base cam portion. In either of PTL1 and PTL2, however, nothing is disclosed about the structure in which the peak of acceleration of the valve is received by the base cam portion.

Additionally, in the case of the cam structure disclosed in PTL1, an entire thickness of the base circular portion is large since the cylinder is interposed between the base circular portions of the two cam pieces. On the other hand, an entire thickness of the valve lifting portion is small since nothing is interposed between the valve lifting portions of the two cam pieces. Namely, a contact face area with the follower of the valve mechanism becomes narrow in the valve lifting portion. Due to this, even if the peak of acceleration of the valve was received not by the roller portion but by the base cam portion, the peak of acceleration of the valve is received by the narrow valve lifting portion. Thus, there are fears that sufficient durability cannot be obtained.

In addition, in the case of the cam structure disclosed in PTL2, the radius of curvature of the opposing face of the cutout portion and the radius of curvature of the outer circumferential face of the roller are centered in the same position. Therefore, the gap defined between the opposing face of the cutout portion and the outer circumferential face of the roller becomes narrow and constant. Namely, an opening of the gap is narrow. Because of this, flexibility in selecting roller diameters becomes small. Further, it becomes difficult to supply a lubricant to the roller by way of the gap. Additionally, in the event that foreign matters such as cuttings enter the gap, the discharging performance of foreign matters is not good, and hence, there are fears that the remaining cuttings bit onto the roller.

In the case of the cam lobe and the camshaft being formed separately, it is considered that the cam lobe is connected to the camshaft with a pin. However, depending upon where to provide a pin hole in the cam lobe, there are fears that the durability of the cam lobe is deteriorated. Because of this, when the pin is used, the pin hole needs to be disposed skillfully.

It is therefore one advantageous aspect of the present invention to provide a cam structure which can obtain a sufficient durability against peak of acceleration of the valve by causing a base cam portion to receive the peak of acceleration of the valve in an ensured fashion.

### Solution to Problem

According to one advantage of the invention, there is provided a cam structure comprising:
a camshaft configured to rotate in association with an operation of an internal combustion engine; and
a cam lobe configured to drive a follower portion of a valve mechanism of the internal combustion engine, wherein
the cam lobe includes
a base cam which is formed with a base circular portion and a valve lifting portion, and
a roller which is provided at a distal end portion of the valve lifting portion and which is configured to rotate with respect to an axis which is parallel to an axis of the camshaft,
the base cam has a valve acceleration characteristic that a first plus peak of acceleration of a valve is caused on starting a valve lift, a second plus peak of the acceleration of the valve is caused on finishing the valve lift, and the acceleration of the valve becomes minus between the first peak and the second peak, and
an outside diameter and mounting position of the roller are set so that, between the first peak and the second peak, the follower portion of the valve mechanism rides on to the roller from the valve lifting portion at a side of the starting of the valve lift and rides on to the valve lifting portion from the roller at a side of the finishing of the valve lift.

The cam structure may be configured such that: the roller is provided in a cutout portion which is formed in the distal end portion of the valve lifting portion; and edge portions of a opposing face of the cutout portion which opposes an outer circumferential face of the roller are set at positions lying closer to the distal end portion of the valve lifting portion than portions where the first and second peaks are caused.

The cam structure may be configured such that: the opposing face of the cutout portion is a curved plane which is curved toward the roller; and a radius of curvature of the curved plane and a radius of curvature of the outer circumferential face of the roller are centered in different positions, and the radius of curvature of the curved plane is set to be larger than the radius of curvature of the outer circumferential face of the roller.

The cam structure may be configured such that: the cam is formed separately from the camshaft; the base circular portion is formed with a shaft mounting hole through which the camshaft is inserted; and the cam is connected to the camshaft with a pin which is inserted into a pin hole formed in the opposing face.

A diameter of the pin hole may be set so that a gap is formed between an inner circumferential face of the pin hole and an outer circumferential face of the pin.

The cam structure may be configured such that: the camshaft includes in an interior thereof an oil path through which a lubricant flows; and the pin includes an oil hole which communicates with the oil path and which is opened at an end portion disposed on the opposing face of the cutout portion in a state where the pin is connected to the camshaft.

### Advantageous Effects of Invention

According to the invention, there is provided the cam structure comprising: the camshaft configured to rotate in association with the operation of the internal combustion engine; and the cam lobe configured to drive the follower portion of the valve mechanism of the internal combustion engine, wherein: the cam lobe includes the base cam which is formed with the base circular portion and the valve lifting portion, and the roller which is provided at the distal end portion of the valve lifting portion and which is configured to rotate with respect to the axis which is parallel to the axis of the camshaft; the base cam has the valve acceleration characteristic that the first plus peak of acceleration of the valve is caused on starting the valve lift, the second plus peak of the acceleration of the valve is caused on finishing the valve lift, and the acceleration of the valve becomes minus between the first peak and the second peak; and the outside diameter and mounting position of the roller are set so that, between the first peak and the second peak, the follower portion of the valve mechanism rides on to the roller from the valve lifting portion at the side of the starting of the valve lift and rides on to the valve lifting portion from the roller at the side of the finishing of the valve lift. Therefore, the first and second peaks of acceleration of the valve, that is, the maximum load that the cam lobe receives from the follower portion of the valve mechanism can be received not by the roller portion but by the base cam. Because of this, the durability of the cam lobe is improved in which the roller is mounted in the distal end portion of the valve lifting portion of the base cam.

Further, the roller is provided in a cutout portion which is formed in the distal end portion of the valve lifting portion; and edge portions of a opposing face of the cutout portion which opposes an outer circumferential face of the roller are set at positions lying closer to the distal end portion of the valve lifting portion than portions where the first and second peaks are caused. Therefore, the first and second peaks of acceleration of the valve can be received by the portion of the valve lifting portion of the base cam where the cutout portion is not provided, and hence, the thickness is large. In other words, the first and second acceleration peaks can be received by the portion having the large contact face area with the follower portion of the valve mechanism. Because of this, the durability of the cam lobe is improved.

The opposing face of the cutout portion is a curved plane which is curved toward the roller; and a radius of curvature of the curved plane and a radius of curvature of the outer circumferential face of the roller are centered in different positions, and the radius of curvature of the curved plane is set to be larger than the radius of curvature of the outer circumferential face of the roller. Thus, the following function and advantage can be obtained. Namely, by forming the opposing face of the cutout portion into the curved plane, the cutout portion can easily be set, which can increase the flexibility in selecting an outside diameter and a mounting position for the roller. In addition, the radius of curvature of the opposing face of the cutout portion (the curved plane) and the radius of curvature of the outer circumferential face of the roller are centered in the different positions. In addition, the radius of curvature of the curved plane is set to be larger than the radius of curvature of the outer circumferential face of the roller. Therefore, a gap (a passage) having wide openings and a narrow central portion is formed between the outer circumferential face of the roller and the opposing face of the cutout portion. Consequently, a lubricant on the follower portion (for example, a valve tappet) of the valve mechanism can be scooped up by edge portions of the opposing face of the cutout portion so as to be supplied to the roller portion by means of the rotation of the roller. This improves the lubrication of the periphery of the roller, and an appropriate amount of lubricant can be kept in the cutout portion. Thus, the sliding resistance between the roller and the follower portion is reduced. Additionally, since the wide gap can be defined between the outer circumferential face of the roller and the opposing face of the cutout portion, a good discharging performance of foreign matters such as cuttings can be provided, thereby making it possible to prevent foreign matters from being bitten to the roller. Further, the assemblage of the roller can be improved by the increased gap between the outer circumferential face of the roller and the opposing face of the cutout portion.

The cam is formed separately from the camshaft; the base circular portion is formed with a shaft mounting hole through which the camshaft is inserted; and the cam is connected to the camshaft with a pin which is inserted into a pin hole formed in the opposing face. Therefore, one opening of the pin hole is disposed on the opposing face of the cutout portion, and the other opening of the pin hole is disposed on an outer circumferential face of the base circular portion. Because of this, the contact face area of the valve lifting portion with the follower portion is prevented from being reduced, in other words, the durability of the cam lobe is not deteriorated, thereby making it possible to suppress an occurrence of distortion that would otherwise be caused when producing the cam lobe.

The camshaft includes in an interior thereof an oil path through which a lubricant flows; and the pin includes an oil hole which communicates with the oil path and which is opened at an end portion disposed on the opposing face of the cutout portion in a state where the pin is connected to the camshaft. Because of this, since the lubricant can be supplied to the cutout portion in an ensured fashion, the sliding resistance between the roller and the follower portion can be reduced in a more ensured fashion. Additionally, since the oil hole through which the lubricant flows is provided in the interior of the pin, there is no need to provide another hole in the cam lobe, thereby making it possible to maintain the durability of the cam lobe.

### Brief Description of Drawings

Fig. 1A is a side view of a cam structure according to an embodiment of the invention, and Fig. 1B is a sectional view taken along the line A-A in Fig. 1A.
Fig. 2 is a sectional view taken along the line B-B in Fig. 1B.
Fig. 3 is a sectional view showing a state resulting before a pin is connected to a camshaft.
Fig. 4 is a block diagram of a valve mechanism which employs the cam structure according to the embodiment of the invention.
Fig. 5A is a side view of a cam structure according to a comparison example of the invention, and Fig. 5B is a sectional view taken along the line C-C in Fig. 5A.
Fig. 6 is a diagram which compares respective regions involved in valve lifting of the cam structure according to the embodiment of the invention and the cam structure according to the comparison example of the invention.
Fig. 7 is a diagram which compares valve actuating characteristics of the cam structure according to the embodiment of the invention with those of the cam structure according to a comparison example of the invention.

### Description of Embodiments

Hereinafter, an embodiment of the invention will be described in detail by reference to the drawings.

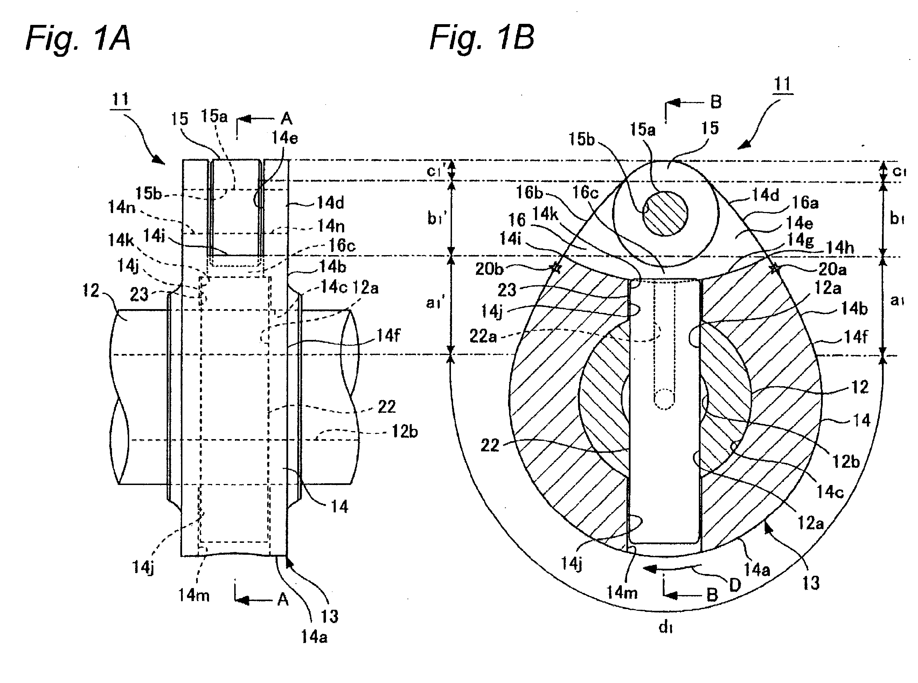

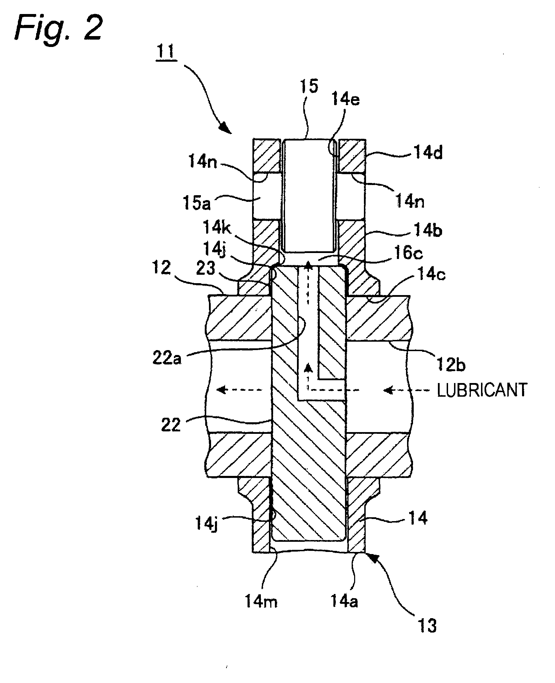

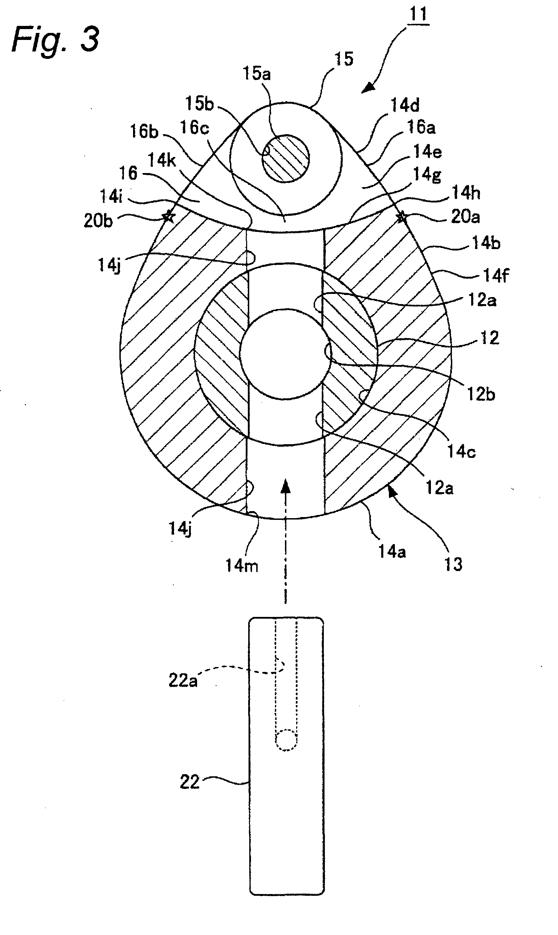

A cam structure 11 according to an embodiment of the invention will be described by reference to Figs. 1A, 1B, 2 and 3.

As shown in these figures, the cam structure 11 of this embodiment includes a camshaft 12 which rotates in association with an operation of a vehicle driving engine and a cam lobe 13 which drives a follower of a valve mechanism of the engine. Although not shown, a plurality of cams 13 are provided on the camshaft 12 so as to correspond to the number of valves (inlet valves or exhaust valves) in respective cylinders of the engine. These cam lobes 13 have the same profile.

The cam lobe 13 has a base cam 14 and a roller 15. The base cam 14 is formed by a base circular portion 14a and a valve lifting portion 14b and has an outer circumferential face which extends continuously along an entire circumference thereof.

The cam structure 11 rotates in a direction indicated by an arrow D in Fig. 1B. The valve lifting portion 14b has a starting side of the valve lift on a right side and a finishing side of the valve lift on a left side thereof as viewed in Fig. 1B. In other words, the right side of the valve lifting portion 14b in Fig. 1 is a valve opening side, and the left side is a valve closing side.

A cutout 14e is provided in a distal end portion (a cam top portion) 14d of the valve lifting portion 14b. The cutout portion 14e is formed in a central portion of the distal end portion 14d of the valve lifting portion 14b (a valve lift distal end portion) in a width direction (a left-to-right direction in Fig. 1B). Because of this, a thickness of the valve lifting portion 14b at a proximal end portion 14f of the valve lifting portion 14b (a valve lift proximal end portion) on the starting side of the valve lift and the finishing side of the valve lift is as thick as the base circular portion 14a. On the other hand, a total thickness of the valve lifting portion 14b at the valve lift distal end portion 14d becomes smaller by a thickness of the cutout portion 14e than the thickness at the valve lift proximal end portion 14f.

The roller 15 is provided in the valve lift distal end portion 14d and is adapted to rotate freely with respect to an axis parallel to an axis of the camshaft 12. The roller 15 is mounted in the valve lift distal end portion 14d in such a state that the roller 15 is fitted in the cutout portion 14e by inserting a rotating shaft 15a through an shaft mounting hole 15b formed in the roller 15 so as to be parallel to the axis of the camshaft 12 and shaft mounting holes 14n formed in the valve lift distal end portion 14d. In addition, the roller 15 is mounted so that part of an outer circumferential face thereof projects further radially outwards than an outer circumferential face of the valve lift distal end portion 14d.

Although this will be described in detail later, the base cam 14 causes a first plus peak of acceleration of the valve on the starting side of the valve lift and causes a second plus peak of acceleration of the valve on the finishing side of the valve lift. In other words, a maximum load that the cam lobe 13 receives from the follower portion of the valve mechanism to receive is caused on the starting side of the valve lift and the finishing side of the valve lift. The base cam 14 has a valve characteristic in which the valve acceleration becomes minus between the first peak of acceleration of the valve and the second peak of acceleration of the valve. An outside diameter and mounting position of the roller 15 are set so that the follower portion of the valve mechanism rides on the roller 15 from the valve lifting portion 14b on the starting side of the valve lift and rides on to the valve lifting portion 14b from the roller 15 on the finishing side of the valve lift between the first peak of acceleration of the valve and the second peak of acceleration of the valve.

An opposing face 14g of the cutout portion 14e which opposes the outer circumferential face of the roller 15 is formed into a curved plane which is curved concavely to the roller 15 (a distal end of the valve lifting portion 14b). Moreover, a radius of curvature of the opposing face (the curved plane) 14g and a radius of curvature of the outer circumferential face of the roller 15 are centered in different positions, and the former is set to be larger than the latter. Because of this, a gap (a passage) 16 defined between the opposing face 14g and the outer circumferential face of the roller 15 is wide at openings 16a, 16b at left and right end portions and is narrow at a central portion 16c thereof.

One edge portion 14h of the opposing face 14g is set to be disposed closer to the valve lift distal end portion 14d than a portion (a portion indicated by a star mark in Fig. 1B) 20a where the first peak of acceleration of the valve is caused. Similarly, the other edge portion 14i of the opposing face 14g is set to be disposed closer to the valve lift distal end portion 14d than a portion (a portion indicated by a star mark in Fig. 1B) 20b where the second peak of acceleration of the valve is caused. Namely, the portions 20a, 20b where the first and second peaks are caused are set to lie in the thicker portion of the valve lifting portion 14b where the cutout portion 14e is not formed. Consequently, the portions 20a, 20b where the first and second peaks of acceleration of the valve are caused have large contact face areas with the follower of the valve mechanism.

As shown in Fig. 1B, on the starting side of the valve lift and the finishing side of the valve lift of the cam structure 11 (the cam lobe 13), regions a1, a1' are regions of the valve lifting portion 14b where the cutout portion 14e is not formed and hence the thickness is large, regions b1, b1' are regions of the valve lifting portion 14b where the cutout portion 14e is formed and hence the thickness is small, regions c1, c1' are regions of the roller 15 which are in relation to valve actuation, and a region d1 is a region of the base circular portion 14a. Namely, the regions a1, a1' are regions which have a large contact face area with the follower portion of the valve mechanism, the regions b1, b1' are regions which have a small contact face area with the follower portion of the valve mechanism, and the regions c1, c1' are regions where the follower portion of the valve mechanism rides on to the roller 15 from the valve lifting portion 14b. Boundary positions between the regions a1, a1' and the regions b1, b1' and the regions c1, c1' vary according to the setting of the radius of curvature of the opposing face 14g of the cutout portion 14e and the outside diameter and mounting position of the roller 15.

The cam lobe 13 is formed separately from the camshaft 12. The camshaft 12 is inserted through a shaft mounting hole 14c provided in the base circular portion 14a. Thereafter, the cam lobe 13 is connected to the camshaft 12 by a pin 22 which is inserted into the cam lobe 13 through the camshaft 12 by way of a pin hole 14j provided in the opposing face 14g.

To describe further, the camshaft 12 has a through hole 12a which is formed along a direction perpendicular to the axis of the camshaft 12. The pin 22 is inserted (press fitted) into the through hole 12a to be fastened in place therein, whereby the pin 22 is fixed to the camshaft 12. The pin hole 14j is formed in the base cam 14 so as to extend in the direction perpendicular to the axis of the camshaft 12 with the camshaft 12 inserted through the shaft mounting hole 14c. An opening 14k at one end of the pin hole 14j is disposed above the opposing face 14g, and an opening 14m at the other end is disposed on an outer circumferential face of the base circular portion 14a. In addition, a diameter of the pin hole 14j is set so that a gap 23 is formed between an inner circumferential face of the pin hole 14j and an outer circumferential face of the pin 22.

Additionally, an oil path 12b is formed in the camshaft 12, and an oil hole 22a is formed in the pin 22. The oil path 12b is formed in the camshaft 12 so as to extend along the direction of the axis of the camshaft 12, and a lubricant flows through an interior of the oil path 12b. With the pin 22 inserted through the through hole 12a in the camshaft 12 and into the pin hole 14j in the base cam 14 so that the pin 22 is connected to the camshaft 12, the oil hole 22a is formed in the pin 22 so as to communicate with the oil passage 12b and is opened at an end portion disposed at the opposing face 14g of the cutout portion 14e. Consequently, a lubricant which is supplied from a lubricant supply device to flow inside the oil passage 12b flows into the oil hole 22a from one end portion (opening) of the oil hole 22a, flows inside the oil hole 22a and flows out from the other end portion (opening) so as to be supplied to the roller 15.

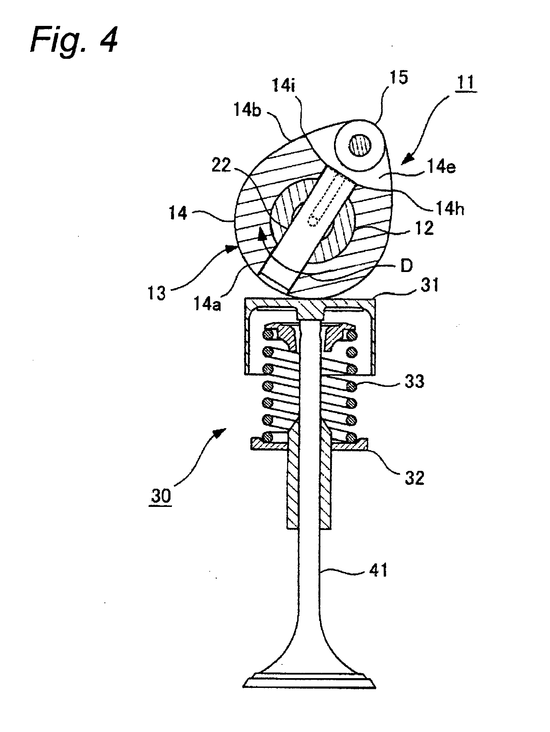

Next, the configuration of the valve mechanism which employs the cam structure 11 of the embodiment will be described by reference to Fig. 4.

As shown in Fig. 4, a valve mechanism 30 is made up of the cam structure 11, a valve tappet 31 (a follower portion of the valve mechanism) which is driven by the cam structure 11, a stationary portion 32, and a valve spring 33 which is interposed between the valve tappet 31 and the stationary portion 32. A proximal end portion of a valve 41 is connected to the valve tappet 31. A slight gap is set between the base circular portion 14a of the base cam 14 of the cam structure 11 and the valve tappet 31, so as to prevent the occurrence of an unnecessary valve opening or closing operation. The valve is an inlet valve or an exhaust valve.

When the camshaft 12 rotates in association with the operation of the engine in a direction indicated by the arrow D, the cam lobe 13 rotates together with the camshaft 12. As this occurs, due to the gap being set, no pressure is given to the valve tappet 31 by the base circular portion 14a while the base circular portion 14a of the base cam 14 is facing the valve tappet 31. Consequently, the valve 41 performs neither opening nor closing operation and is kept in a fully closed state by the spring force of the valve spring 33. Thereafter, when the cam lobe 13 rotates further so that the valve tappet 31 rides on to the valve lifting portion 14b from the base circular portion 14a of the base cam 14, the valve lifting portion 14b pushes on the valve tappet 31. Because of this, the valve 41 is pushed down together with the valve tappet 31 against the spring force of the valve spring 33, whereby the valve 41 starts to open. Namely, the valve 41 starts to lift.

Following this, when the valve tappet 31 rides on to the roller 15 from the valve lifting portion 14b, the roller 15 pushes on the valve tappet 31. Because of this, the valve 41 is pushed down further against the spring force of the valve spring 33, and the valve lift is increased further, whereby amount of the valve lift becomes to be maximal. Thereafter, the valve 41 is pushed up by the spring force of the valve spring 33 and starts to close. Namely, the valve 41 starts to finish the valve lift. Thereafter, the valve is fully closed.

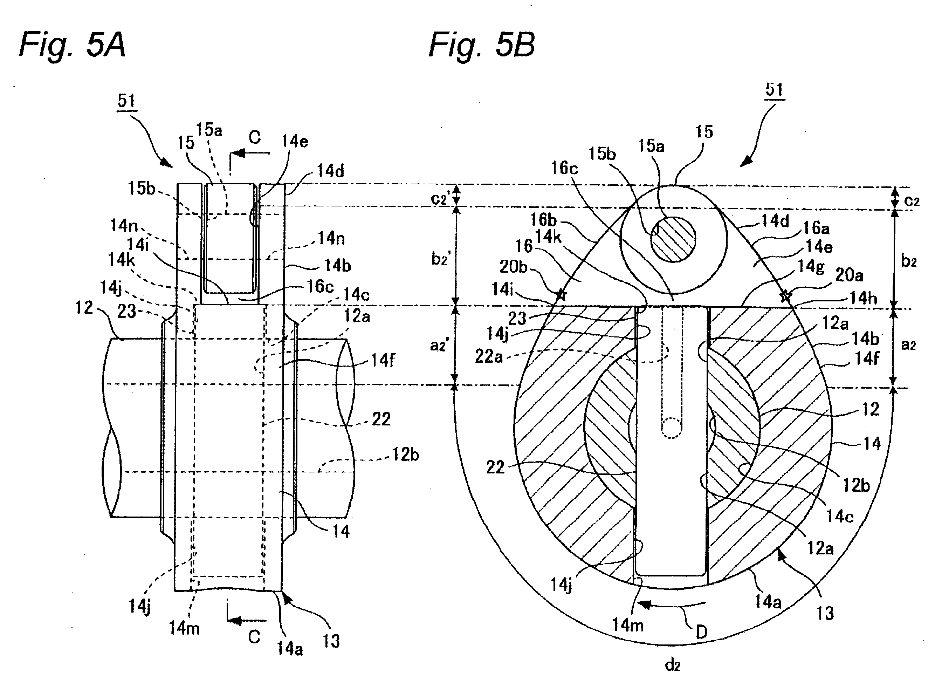

Next, a cam structure 51 according to a comparison example of the invention will be described by reference to Figs. 5A and 5B.

The cam structure 51 of the comparison example differs from the cam structure 11 in that a opposing face 14g of a cutout portion 14e which opposes an outer circumferential face of a roller 15 is formed into a flat plane. The other configurations of the cam structure 51 are similar to those of the cam structure 11.

As shown in Fig. 5B, on starting side of the valve lift and finishing side of the valve lift of the cam structure 51 (a cam lobe 13), regions a2, a2' are regions of a valve lifting portion 14b where a cutout portion 14e is not formed and hence the thickness is large, regions b2, b2' are regions of the valve lifting portion 14b where the cutout portion 14e is formed and hence the thickness is small, regions c2, c2' are regions of the roller 15 which are in relation to valve actuation, and a region d2 is a region of a base circular portion 14a. Namely, the regions a2, a2' are regions which have a large contact face area with a follower portion of a valve mechanism, the regions b2, b2' are regions which have a small contact face area with the follower portion of the valve mechanism, and the regions c2, c2' are regions where the follower portion of the valve mechanism rides on to the roller 15 from the valve lifting portion 14b.

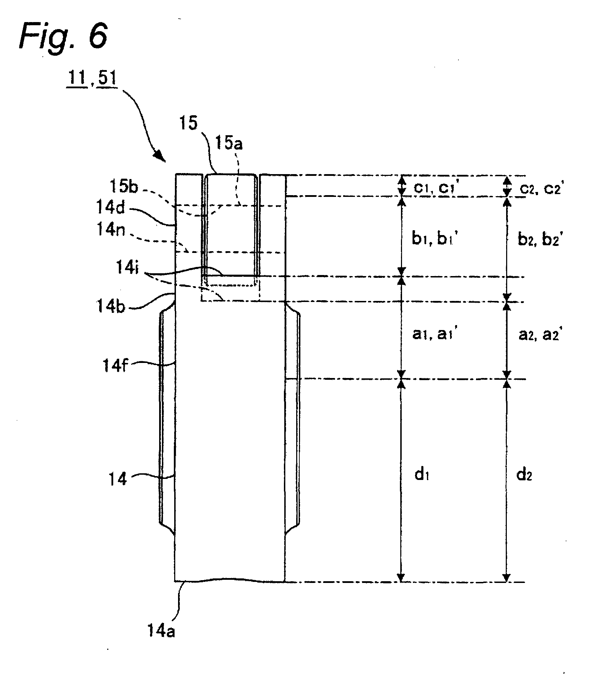

Fig. 6 shows the result of a comparison of the regions a1, a1', b1, b1', c1, c1', d1 of the cam structure 11 with the regions a2, a2', b2, b2', c2, c2', d2 of the cam structure 51. In the cam structure 11, the opposing face 14g is formed into the curved plane, while in the cam structure 51, the opposing face 14g is formed into the flat plane. Because of this, in the cam structure 11, the portions 20a, 20b where the first and second peaks of acceleration of the valve are caused are disposed in the regions a1, a1' where the thickness of the valve lifting portion 14b is large. In contrast, in the cam structure 51, portions 20a, 20b where first and second peaks of acceleration of the valve are caused are disposed in the regions b2, b2' where the thickness of the valve lifting portion 14b is small. The regions c1, c1' and d1 of the cam structure 11 and the regions c2, c2' and d2 of the cam structure 51 are identical.

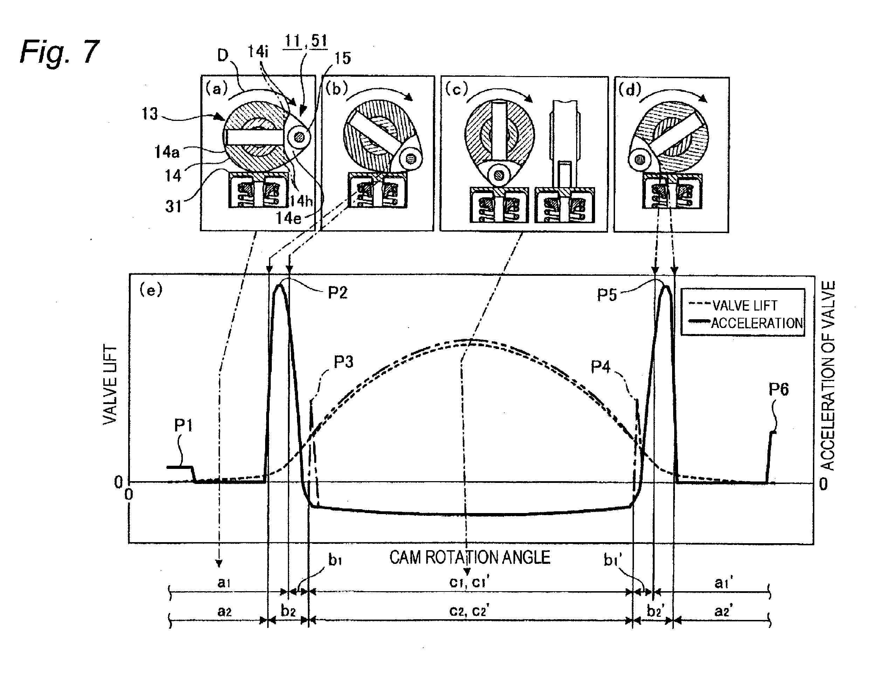

Next, valve actuating characteristics (a finishing of the valve lift characteristic, a valve acceleration characteristic) of the cam structure 11 and the cam structure 51 will be described by reference to Fig. 7. States of the cam structures 11, 51 at respective cam rotation angles when the cam structures 11, 51 rotate in a direction indicated by an arrow D are shown as (a) to (d). The respective states of the structure 11 in which the opposing face 14g of the cutout portion 14e is formed into the curved plane are indicated by a solid line, whereas the respective states of the structure 51 in which the opposing face 14g is formed into the flat plane is indicated by an alternate long and short dash line. As shown as (e), a left axis of ordinate denotes amount of the valve lift, a right axis of ordinate denotes valve acceleration, and an axis of abscissa denotes cam rotation angle. In Fig. 7, a dotted line denotes the valve lift characteristic of the base cam 14, a solid line denotes a valve acceleration characteristic of the base cam 14. In addition, in Fig. 7, an alternate long and short dash line denotes the valve lift characteristic of the roller 15, and a chain double-dashed line denotes a valve acceleration characteristic of the roller. Note that the valve acceleration is a numeric value indicating a time differentiation of an angular speed of the valve.

As shown as (e) of Fig. 7, the cam structure 11 and the cam structure 51 have the same valve lift characteristic and valve acceleration characteristic. It is seen from this that the valve lift characteristic and the valve acceleration characteristic are constant irrespective of the shape of the opposing face 14g of the cutout portion 14e. On the other hand, the valve lift characteristic and the valve acceleration characteristic differ between the two structures in relation to the regions where the first and second peaks of acceleration of the valve are caused.

To describe this in detail, as shown as (e) of Fig. 7, in the valve acceleration characteristics of the cam structures 11, 51, plus peaks of acceleration of the valve P1 to P6 are caused.

On the starting side of the valve lift, firstly, a small peak of acceleration of the valve P1 is caused when the valve tappet 31 rides on to the valve lifting portion 14b (the regions a1, a2) from the base circular portion 14a (the regions d1, d2) of the base cam 14.

Thereafter, after the valve acceleration becomes zero once, a large peak of acceleration of the valve P2 (a first peak of acceleration of the valve) is caused, and the valve lift (the opening of the valve 41) is increased rapidly. Then, in the cam structure 11, the peak of acceleration of the valve P2 is caused in the region a1 of the valve lifting portion 14b where the thickness is large since the position of the edge portion 14h is adjusted by forming the opposing face 14g of the cutout portion 14e into the curved plane. On the other hand, in the cam structure 51, the opposing face 14g of the cutout portion 14e is formed into the flat plane, and the position of the edge portion 14h is not adjusted. Therefore, the peak of acceleration of the valve P2 is caused in the region b2 of the valve lifting portion 14b where the thickness is small.

After the peak of acceleration of the valve P2 has been caused, the valve acceleration decreases to become minus. A peak of acceleration of the valve P3 which is smaller than the peak of acceleration of the valve P2 is caused when the valve tappet 31 rides on to the roller 15 (the region c2) from the valve lifting portion 14b (the region b2) of the base cam 14. In other words, in the cam structure 11, in the valve acceleration characteristic of the base cam 14, the outside diameter and mounting position of the roller 15 are set so that the valve tappet 31 rides smoothly on to the roller 15 (the region c1) from the valve lifting portion 14b (the region b1) of the base cam 14 when the valve acceleration decreases to become minus after the plus peak of acceleration of the valve P2 has been caused on the starting side of the valve lift or in the midst of decreasing of the valve acceleration from the peak of acceleration of the valve P2.

After the peak of acceleration of the valve P3 has been caused, a state continues where the valve acceleration stays minus. However, during this period of time, the amount of the valve lift (the opening of the valve 41) reaches its maximum value, whereafter the amount of the valve lift decreases. Namely, there occurs a transition from the starting of the valve lift to the finishing of the valve lift. In other words, there occurs a transition from the valve opening phase to the valve closing phase.

On the finishing side of the valve lift, peaks of acceleration of the valve P4 to P6 are caused in an opposite order to that in which the peaks of acceleration of the valve P1 to P3 are caused on the starting side of the valve lift. Firstly, when the valve tappet 31 rides on to the valve lifting portion 14b (the regions b1', b2') of the base cam 14 from the roller 15 (the regions c1, c2), a peak of acceleration of the valve P4 which is smaller than a peak of acceleration of the valve P5 (a second peak of acceleration of the valve) is caused. In other words, in the cam structure 11, in the valve acceleration characteristic of the base cam 14, the outside diameter and mounting position of the roller 15 are set so that the valve tappet 31 rides on to the valve lifting portion 14b (the region b1) of the base cam 14 from the roller 15 (the region c1') when the valve acceleration before the plus peak of acceleration of the valve P5 is caused is minus on the finishing side of the valve lift or in the midst of increasing of the valve acceleration to the peak of acceleration of the valve P5.

After the peak of acceleration of the valve P4 has been caused, the large peak of acceleration of the valve P5 (the second peak of acceleration of the valve) is caused at the valve lifting portion 14b of the base cam 14.

Namely, the outside diameter and mounting position of the roller 15 are set so that the valve tappet 31 rides on to the roller 15 (the regions c1, c2) from the valve lifting portion 14b (the regions b1, b2) on the starting side of the valve lift and the valve tappet 31 rides on to the valve lifting portion 14b from the roller 15 (the regions c1, c2) on the finishing side of the valve lift, between the peak of acceleration of the valve P2 (the first peak of acceleration of the valve) and the valve acceleration beak P5 (the second peak of acceleration of the valve).

In other words, the outside diameter and mounting position of the roller 15 are set so that the valve tappet 31 rides on to the roller 15 (the regions c1, c2) from the valve lifting portion 14b (the regions b1, b2) on the starting side of the valve lift and the valve tappet 31 rides on to the valve lifting portion 14b from the roller 15 (the regions c1, c2) on the finishing side of the valve lift, in a time period after the peak of acceleration of the valve P2 (the first peak of acceleration of the valve) and before the valve acceleration beak P5 (the second peak of acceleration of the valve). The time period does not include a time when the peak of acceleration of the valve P2 (the first peak of acceleration of the valve) is caused and a time when the valve acceleration beak P5 (the second peak of acceleration of the valve) is caused.

Moreover, in the cam structure 11 in which the position of the edge portion 14i is adjusted by forming the opposing face 14g of the cutout portion 14e into the curved plane, the peak of acceleration of the valve P5 is caused in the region a1' of the valve lifting portion 14b where the thickness is large. On the other hand, the peak of acceleration of the valve P5 is caused in the region b2' of the valve lifting portion 14b where the thickness is small in the cam structure 51 in which the opposing face 14g of the cutout portion 14e is formed into the flat plane, and hence, the position of the edge portion 14i is not adjusted.

Thereafter, after the valve acceleration becomes 0 once, a small peak of acceleration of the valve P6 is caused when the valve tappet 31 rides on to the base circular portion 14a from the valve lifting portion 14b (the regions a1', a2') of the base cam 14.

Fig. 7 shows the valve actuating characteristics in a case where the gap between the base circular portion 14a of the base cam 14 and the valve tappet 31 is not taken into consideration. In reality, since the gap exists, the small peak of acceleration of the valves P1, P6 are not caused. Thus, the large peak of acceleration of the valve P2 (the first peak of acceleration of the valve) is caused at the start of the starting of the valve lift, and the large peak of acceleration of the valve P5 (the second peak of acceleration of the valve) is caused at the end of the finishing of the valve lift.

Thus, according to the cam structure 11 of this embodiment, there is provided the cam structure 11 comprising the camshaft 12 which rotates in association with the operation of the engine, and the cam lobe 13 which drives the valve tappet 31 of the valve mechanism 30 of the engine, wherein the cam lobe 13 includes the base cam 14 which is formed with the base circular portion 14a and the valve lifting portion 14b and the roller 15 which is provided at the valve lift distal end portion 14d and which is adapted to rotate with respect to the rotating shaft 15a which is parallel to the axis of the camshaft 12, wherein the base cam 14 has a valve acceleration characteristic that the first plus peak of acceleration of the valve P2 is caused on starting of the valve lift, the second plus peak of acceleration of the valve P5 is caused on finishing of the valve lift, and the valve acceleration becomes minus between the first peak of acceleration of the valve P2 and the second peak of acceleration of the valve P5, and wherein the outside diameter and mounting position of the roller 15 are set so that the valve tappet 31 of the valve mechanism 30 rides on to the roller 15 from the valve lifting portion 14b at a side of the starting of the valve lift and rides on to the valve lifting portion 14b from the roller 15 at a side of the finishing of the valve lift between the first peak of acceleration of the valve P2 and the second peak of acceleration of the valve P5. Therefore, the first and second peaks of acceleration of the valve P2, P5, that is, the maximum load that the cam lobe 13 receives from the valve tappet 31 of the valve mechanism 30 can be received not by the portion of the roller 15 but by the base cam 14. Because of this, the durability of the cam lobe 13 is increased in which the roller 15 is mounted in the valve lift distal end portion 14d of the base cam 14.

According to the cam structure 11 of the embodiment, the roller 15 is provided in the cutout portion 14e which is formed in the valve lift distal end portion 14d, and the edge portions 14h, 14i of the opposing face 14g of the cutout portion 14e which opposes the outer circumferential face of the roller 15 are set at the positions 20a, 20b which lie closer to the valve lift distal end portion 14d than the portions 20a, 20b where the first and second peaks of acceleration of the valve P2, P5 are caused. Therefore, the first and second peaks of acceleration of the valve P2, P5 can be received by the portion of the valve lifting portion 14b of the base cam 14 where the cutout portion 14e is not provided, and hence, the thickness is large. Namely, the first and second acceleration peaks P2, P5 can be received by the portions having the large contact face area with the valve tappet 31 of the valve mechanism 30. Because of this, the durability of the cam lobe 13 is increased.

According to the cam structure 11 of this embodiment, the opposing face 14g of the cutout portion 14e is formed into the curved plane which is curved concavely to the roller 15, and the radius of curvature of the curved plane and the radius of curvature of the outer circumferential face of the roller 15 are centered in the different positions. In addition, the radius of curvature of the curved plane is set to be larger than the radius of curvature of the outer circumferential face of the roller 15. Thus, the following function and advantage can be obtained. Namely, by forming the opposing face 14g of the cutout portion 14e into the curved plane, the cutout portion 14e can easily be set, which can increase the flexibility in selecting an outside diameter and a mounting position for the roller 15.

In addition, the radius of curvature of the opposing face 14g of the cutout portion 14e and the radius of curvature of the outer circumferential face of the roller 15 are centered in the different positions. In addition, the radius of curvature of the curved plane is set to be larger than the radius of curvature of the outer circumferential face of the roller 15. Therefore, the gap (the passage) having the wide openings 16a, 16b and the narrow central portion 16c is formed between the outer circumferential face of the roller 15 and the opposing face 14g of the cutout portion 14e. Consequently, the lubricant on the valve tappet 31 of the valve mechanism 30 can be scooped up by the edge portions 14h, 14i of the opposing face 14g of the cutout portion 14e, preferably by the edge portion 14i, so as to be supplied to the portion of the roller 15 by means of the rotation of the roller 15. This improves the lubrication of the periphery of the roller 15, and an appropriate amount of lubricant can be held in the cutout portion 14e. Thus, the sliding resistance between the roller 15 and the valve tappet 31 is reduced. Additionally, since the gap 16 defined between the outer circumferential face of the roller 15 and the opposing face 14g of the cutout portion 14e has the wide openings 16a, 16b, a good discharging performance of foreign matters such as cuttings from the gap 16 can be provided, thereby making it possible to prevent foreign matters from biting to the roller 15. Further, the assemblage of the roller 15 can be improved by the increased gap 16 between the outer circumferential face of the roller 15 and the opposing face 14g of the cutout portion 14e.

According to the cam structure 11 of the embodiment, the cam lobe 13 is formed separately from the camshaft 12, and the cam lobe 13 is connected to the camshaft 12 with the pin 22 which is inserted into the pin hole 14j formed in the opposing face 14g after the camshaft 12 is inserted through the camshaft hole 14c provided in the base circular portion 14a. Therefore, one opening 14k of the pin hole 14j is disposed on the opposing face 14g of the cutout portion 14e, and the other opening 14m of the pin hole 14j is disposed on an outer circumferential face of the base circular portion 14a. Because of this, the contact face area of the valve lifting portion 14b with the valve tappet 31 is prevented from being reduced, in other words, the durability of the cam lobe 13 is not deteriorated, thereby making it possible to suppress the generation of distortion that would otherwise be caused when producing the cam lobe 13.

According to the cam structure 11 of the embodiment, the camshaft 12 includes in the interior thereof the oil path 12b through which the lubricant flows, and the pin 22 includes the oil hole 22a which communicates with the oil path 12b and which is opened at the end portion disposed on the opposing face 14g of the cutout portion 14e in a state where the pin 22 is connected to the camshaft 12. Because of this, since the lubricant can be supplied to the cutout portion 14e in an ensured fashion, the sliding resistance between the roller 15 and the valve tappet 31 can be reduced in a more ensured fashion. Additionally, since the oil hole 22a through which the lubricant flows is provided in the interior of the pin 22, there is no need to provide another hole in the cam lobe 13, thereby making it possible to maintain the durability of the cam lobe 13.

### Industrial Applicability of Invention

The invention relates to a cam structure for an engine and becomes useful when applied to a cam structure with a roller.

### Reference Signs List

11 cam structure
12 camshaft
12a through hole
12b oil path
13 cam lobe
14 base cam
14a base circular portion
14b valve lifting portion
14c shaft mounting hole
14d valve lift distal end portion
14e cutout portion
14f valve lift proximal end portion
14g opposing face of cutout portion
14h, 14i edge portion of opposing face
14j pin hole
14k, 14m opening of pin hole
14n shaft mounting hole
15 roller
15a roller rotating shaft
15b shaft mounting hole
16 gap between opposing face of cutout portion and outer circumferential face of roller
16a, 16b opening of gap
16c central portion of gap
20a portion where first peak of acceleration of the valve is caused
20b portion where second peak of acceleration of the valve is caused
22 pin
22a oil hole
23 gap between inner circumferential face of pin hole and outer circumferential face of pin
30 valve mechanism
31 valve tappet
32 stationary portion
33 vale spring
41 valve (inlet valve or exhaust valve)
51 cam structure.

## Claims

1. A cam structure (11; 51) comprising:
a camshaft (12) configured to rotate in association with an operation of an internal combustion engine; and
a cam lobe (13) configured to drive a follower portion of a valve mechanism (30) of the internal combustion engine, wherein
the cam lobe (13) includes
a base cam (14) which is formed with a base circular portion (14a) and a valve lifting portion (14b), and
a roller (15) which is provided at a distal end portion (14d) of the valve lifting portion (14b) and which is configured to rotate with respect to an axis which is parallel to an axis of the camshaft (12), wherein the roller (15) is provided in a cutout portion (14e) which is formed in the distal end portion (14d) of the valve lifting portion (14b),
the base cam (14) has a valve acceleration characteristic that a first plus peak of acceleration of a valve (41) is caused on starting a valve lift, a second plus peak of the acceleration of the valve (41) is caused on finishing the valve lift, and the acceleration of the valve (41) becomes minus between the first peak and the second peak,
an outside diameter and mounting position of the roller (15) are set so that, between the first peak and the second peak, the follower portion of the valve mechanism (30) rides on to the roller (15) from the valve lifting portion (14b) at a side of the starting of the valve lift and rides on to the valve lifting portion (14b) from the roller (15) at a side of the finishing of the valve lift,
edge portions (14h, 14i) of an opposing face (14g) of the cutout portion which opposes an outer circumferential face of the roller (15) are set at positions lying closer to the distal end portion (14d) of the valve lifting portion than portions where the first and second peaks are caused,
the opposing face (14g) of the cutout portion is a curved plane which is curved toward the roller (15), and
the radius of curvature of the curved plane is set to be larger than the radius of curvature of the outer circumferential face of the roller (15)
**characterized in that** the radius of curvature of the curved plane and the radius of curvature of the outer circumferential face of the roller (15) are centered in different positions.

2. The cam structure as set forth in Claim 1, wherein
the cam is formed separately from the camshaft (12),
the base circular portion (14a) is formed with a shaft mounting hole (14c) through which the camshaft (12) is inserted, and
the cam is connected to the camshaft (12) with a pin (22) which is inserted into a pin hole (14j) formed in the opposing face (14g).

3. The cam structure as set forth in Claim 2, wherein
a diameter of the pin hole (14j) is set so that a gap (23) is formed between an inner circumferential face of the pin hole (14j) and an outer circumferential face of the pin (22).

4. The cam structure as set forth in Claim 3, wherein
the camshaft (12) includes in an interior thereof an oil path (12b) through which a lubricant flows, and
the pin (22) includes an oil hole (22a) which communicates with the oil path and which is opened at an end portion disposed on the opposing face (14g) of the cutout portion in a state where the pin (22) is connected to the camshaft (12).

## Patentansprüche

1. Nockenstruktur (11; 51) mit:
einer Nockenwelle (12), die konfiguriert ist, sich in Verbindung mit einem Betrieb eines Verbrennungsmotors zu drehen; und
eine Nockenerhebung (13), die konfiguriert ist, einen Stößelabschnitt eines Ventilmechanismus (30) des Verbrennungsmotors anzutreiben, wobei
die Nockenerhebung (13) umfasst
einen Basisnocken (14), der mit einem kreisförmigen Basisabschnitt (14a) und einem Ventilhebeabschnitt (14b) ausgebildet ist, und
eine Rolle (15), die an einem distalen Endabschnitt (14d) des Ventilhebeabschnitts (14b) vorgesehen ist und die konfiguriert ist, sich bezüglich einer Achse zu drehen, die parallel zu einer Achse der Nockenwelle (12) ist, wobei die Rolle (15) in einem Aussparungsabschnitt (14e) vorgesehen ist, der im distalen Endabschnitt (14d) des Ventilhebeabschnitts (14b) ausgebildet ist,
der Basisnocken (14) eine solche Ventilbeschleunigungscharakteristik aufweist, dass ein erster positiver Spitzenwert der Beschleunigung eines Ventils (41) beim Beginnen eines Ventilhubs bewirkt wird, ein zweiter positiver Spitzenwert der Beschleunigung des Ventils (41) beim Beenden des Ventilhubs bewirkt wird, und die Beschleunigung des Ventils (41) zwischen dem ersten Spitzenwert und dem zweiten Spitzenwert negativ wird,
ein Außendurchmesser und eine Montageposition der Rolle (15) so festgelegt sind, dass zwischen dem ersten Spitzenwert und dem zweiten Spitzenwert der Stößelabschnitt des Ventilmechanismus (30) auf einer Seite des Beginnens des Ventilhubs vom Ventilhebeabschnitt (14b) weiter zur Rolle (15) läuft und auf einer Seite des Beendens des Ventilhubs von der Rolle (15) weiter zum Ventilhebeabschnitt (14b) läuft,
Kantenabschnitte (14h, 14i) einer gegenüberliegenden Fläche (14g) des Aussparungsabschnitts, die einer Außenumfangsfläche der Rolle (15) gegenüberliegt, auf Positionen festgelegt sind, die näher zum distalen Endabschnitt (14d) des Ventilhebeabschnitts liegen als Abschnitte, wo der erste und zweite Spitzenwert bewirkt werden,
die gegenüberliegende Fläche (14g) des Aussparungsabschnitts eine gekrümmte Ebene ist, die zur Rolle (15) gekrümmt ist, und
der Krümmungsradius der gekrümmten Ebene so festgelegt ist, dass er größer als der Krümmungsradius der Außenumfangsfläche der Rolle (15) ist,
**dadurch gekennzeichnet, dass** der Krümmungsradius der gekrümmten Ebene und der Krümmungsradius der Außenumfangsfläche der Rolle (15) an unterschiedlichen Positionen zentriert sind.

2. Nockenstruktur nach Anspruch 1, wobei
die Nocke getrennt von der Nockenwelle (12) ausgebildet ist,
der kreisförmige Basisabschnitt (14a) mit einem Wellenmontageloch (14c) ausgebildet ist, durch das die Nockenwelle (12) eingesetzt wird, und
die Nocke mit der Nockenwelle (12) mit einem Stift (22) verbunden ist, der in ein Stiftloch (14j) eingesetzt ist, das in der gegenüberliegenden Fläche (14g) ausgebildet ist.

3. Nockenstruktur nach Anspruch 2, wobei ein Durchmesser des Stiftlochs (14j) so festgelegt ist, dass ein Spalt (23) zwischen einer Innenumfangsfläche des Stiftlochs (14j) und einer Außenumfangsfläche des Stifts (22) ausgebildet ist.

4. Nockenstruktur nach Anspruch 3, wobei
die Nockenwelle (12) in ihrem Inneren einen Ölweg (12b) aufweist, durch den ein Schmiermittel fließt, und
der Stift (22) ein Ölloch (22a) aufweist, das mit dem Ölweg in Verbindung steht und das in einem Zustand, wo der Stift (22) mit der Nockenwelle (12) verbunden ist, an einem Endabschnitt geöffnet ist, der auf der gegenüberliegenden Fläche (14g) des Aussparungsabschnitts angeordnet ist.

## Revendications

1. Structure de came (11 ; 51) comprenant :
un arbre à cames (12) prévu pour être entraîné en rotation en liaison avec le fonctionnement d'un moteur à combustion interne ; et
un lobe de came (13) prévu pour entraîner une partie suiveuse d'un mécanisme à soupape (30) du moteur à combustion interne, où
le lobe de came (13) comprend
une came de base (14) formée avec une partie circulaire de base (14a) et une partie de levage de soupape (14b), et
un galet (15) prévu dans une partie d'extrémité distale (14d) de la partie de levage de soupape (14b) et configuré pour être entraîné en rotation par rapport à un axe parallèle à un axe de l'arbre à cames (12), le galet (15) étant prévu dans une découpe (14e) formée dans la partie d'extrémité distale (14d) de la partie de levage de soupape (14b),
la came de base (14) présentant une caractéristique d'accélération de soupape telle qu'un premier pic positif d'accélération d'une soupape (41) est généré lors de la levée de soupape, un deuxième pic positif d'accélération de la soupape (41) est généré à la fin de levée de soupape, et que l'accélération of the soupape (41) devient négative entre le premier pic et le deuxième pic,
un diamètre extérieur et une position de montage du galet (15) étant prévus de telle manière qu'entre le premier pic et le deuxième pic, la partie suiveuse du mécanisme à soupape (30) glisse vers le galet (15) depuis la partie de levage de soupape (14b) du côté du début de levée de soupape et glisse vers la partie de levage de soupape (14b) depuis le galet (15) du côté de la fin de levée de soupape,
des parties de bord (14h, 14i) d'une face opposée (14g) de la découpe, en vis-à-vis d'une face circonférentielle extérieure du galet (15) étant prévues à des emplacements plus proches de la partie d'extrémité distale (14d) de la partie de levage de soupape que des parties où le premier et le deuxième pics sont générés,
la face opposée (14g) de la découpe formant un plan incurvé vers le galet (15), et
le rayon de courbure du plan incurvé étant prévu supérieur au rayon de courbure de la face circonférentielle extérieure du galet (15),
**caractérisée en ce que** le rayon de courbure du plan incurvé et le rayon de courbure de la face circonférentielle extérieure du galet (15) ont des centres différents.

2. Structure de came selon la revendication 1, où
la came est formée séparément de l'arbre à cames (12),
la partie circulaire de base (14a) est formée avec un alésage (14c) de montage d'arbre recevant l'arbre à cames (12), et où
la came est raccordée à l'arbre à cames (12) par une broche (22) logée dans un alésage (14j) pour broche formé dans la face opposée (14g).

3. Structure de came selon la revendication 2, où le diamètre de l'alésage (14j) pour broche est prévu de manière à former un interstice (23) entre une face circonférentielle intérieure de l'alésage (14j) pour broche et une face circonférentielle extérieure de la broche (22).

4. Structure de came selon la revendication 3, où
l'arbre à cames (12) comporte à l'intérieur un canal d'huile (12b) par où s'écoule un lubrifiant, et où
la broche (22) comporte un alésage d'huile (22a) relié au canal d'huile et ouvert à une partie d'extrémité sur la face opposée (14g) de la découpe, dans un état où la broche (22) est raccordée à l'arbre à cames (12).
